# EUROPEAN PATENT SPECIFICATION

(11) **EP 1 250 551 B1**
(45) Date of publication and mention of the grant of the patent: **04.05.2005**
(21) Application number: 00989113.6
(22) Date of filing: 20.12.2000
(51) Int. Cl.: F16S 3/00, E04H 17/20, F16B 7/04

(54) **HOLLOW PROFILE**
HOHLES PROFIL
PROFILE CREUX

(30) Priority: 25.01.2000 SE 0000224
(43) Date of publication of application: 23.10.2002
(73) Proprietor: Avestapolarit AB, 774 80 Avesta (SE)
(72) Inventor: CARLSSON, Leif, S-465 91 Nossebro (SE); GROTH, Hans, S-774 61 Avesta (SE)
(74) Representative: Bjelkstam, Peter
(86) International application number: PCT/SE2000/002603
(87) International publication number: WO 2001/055635

(56) References cited:
- DE-A1- 3 422 049
- DE-A1- 4 401 943

## Description

The present invention relates to a hollow profile consisting of a resilient metallic or plastic material (see e.g. DE-A-4 401 943). The profile according to the invention is primarily intended for use when there is need for a simple and quick joining of fences, gates, framework structures, framings, so called "space frames", as well as frames in big and small buildings and rails for pedestrians and motor vehicles etc.

There do today in the market exist a number of different types of metal profiles consisting of steel or aluminum tubes, the cross-section of which can be square, rectangular, L-, U-, Tor H-shaped. All of those profiles have drawbacks when used in different area. Among other things it is complicated and difficult to join them without welding or using of additional joints. Weld joints weaken the structure if they are located in the places with the highest stresses. Further, it is difficult to perform welding on surface-coated materials.

The profiles manufactured today do generally not consist of high-strength resilient materials. A consequence of this is that the structures in which such profiles are included become heavy and expensive. Also, there is often necessary to carry out a surface conditioning after the joining together, unless stainless steel is used. Finally, it is difficult to punch hole patterns in circumferentially closed profiles.

The object of the present invention is to provide a hollow profile of the type defined above at which the above-mentioned disadvantages have been minimized. The features characterizing the invention are set out in the claims enclosed.

Thanks to the invention there has now been provided a hollow profile which in an excellent manner satisfies the use conditions and moreover can be manufactured conveniently and at a low price. The profile according to the invention exhibits a longitudinal slot extending along a longitudinal side or, preferably, in the transfer zone between two adjacent longitudinal sides. A hollow profile according to the invention does neither require any surface conditioning when stainless steel is used and a 100% recovery also of the mounting elements is possible in the cases when they do likewise consist of stainless steel. Due its unique structural configuration the hollow profile can easily be connected to adjacent profiles. One reason for this is that the hollow profile can conveniently be machined, either directly in connection with its manufacture or later in the way that tools, a punsch or die is inserted into the hollow space and there guided through the longitudinal slot. Joining or connection to adjacent profiles, e.g. for the purpose to construct a fence, does only require two screws or rivets at each junction point. If welding is required or desired welding points can be placed at the profile slot where the material is folded to double thickness which reduces the strenght of the profiles only insignificantly, the torsional rigidity being at the same time improved.

When the profile is used as a post, in frameworks or the like, two or more profiles can be combined at 90° angles in a very simple and convenient way. Further, reinforcing components in the shape of hinge mountings and other components can easily be mounted inside the profiles thanks to the slot. They can also via the slot be connected to external elements. The presence of the slot does also offer a possibility to use it not only for positioning and supporting different types of plate elements but also clamping together or expanding the cross-section of the mounting which, as has been explained above, is most important as far as machining, mounting and joining are concerned.

A preferred embodiment of the invention will now be described, reference being made to the enclosed drawing.
- Fig. 1: is a diagrammatic perspective view showing a hollow profile according to the invention consisting of a first, vertical mounting which supports a second profile which is inserted in a punched out opening and has a form corresponding to that of the profile,
- Fig. 2: shows the hollow profile according to the invention before its introduction into a punsch opening in the vertical profile,
- Fig. 3: illustrates another possibility to join to two profiles at an angle relatively each other,
- Fig. 4: shows a corner where two profiles according to the invention have been locked in position relatively each other and where the longitudinal slots are facing outwards, and
- Fig. 5: illustrates two profiles bonded together and crossing each other according to the invention.

As appears more in detail from the drawings a preferred embodiment of the invention is constituted by a hollow profile 1 comprising six lateral sides and a slot 2 extending in the longitudinal direction of said profile 1 between two adjacent, longitudinal side walls 10,11. According to alternative embodiments the profile 1 according to the invention can also have a cross-section in the form of a flat oval, circle, ellipse or polygon.

In the preferred embodiment profile 1 has four obtuse angles 3-6 between its lateral walls 7,12 and two opposite acute angles 13 and 14.

In the example shown the obtuse angles 3-6 are greater than 90° and, more specifically, 135°, whereas the acute angles 13-14 are about 90°. The longitudinal slot 2 defined by parallel edge portions 15 and 16 which have been bent towards each other from the adjacent sides 10 and 11 and extend a short distance into the profile 1. Said edge portions 15 and 16 contact each other resiliently, can be located at a predetermined distance from each other, for example twice the material thickness, or just extend in parallel close to each other.

The first two adjacent sides 7,8 of the hollow profile 1 form between themselves an angle 13 of about 90° and continue as two opposite sides 9,12, defining therewith an angle 3,4 greater than 90°. All opposite sides are parallel to each other.

In the example shown the hollow profile mounting 1 is constituted by a hexagonal tube of thin walled resilient metal sheet of high strenght with a tensional strength preferably above 700 N/mm². The corners of the profile 1,1' can be rounded.

It is convenient during the manufacturing process to punsch out openings or holes to be used for a later connection with similar hollow profiles 1,1', or with opposite openings which permit mountings of different dimensions to cross each other. Thanks to the use of the high strength thin wall material it is also possible to insert the profiles into each other through the openings or holes created, the slot also providing a possibility to clamp together or to expand the cross-section of the profiles. The possibility last mentioned is important in connection with both machining, mounting and joining of the profiles.

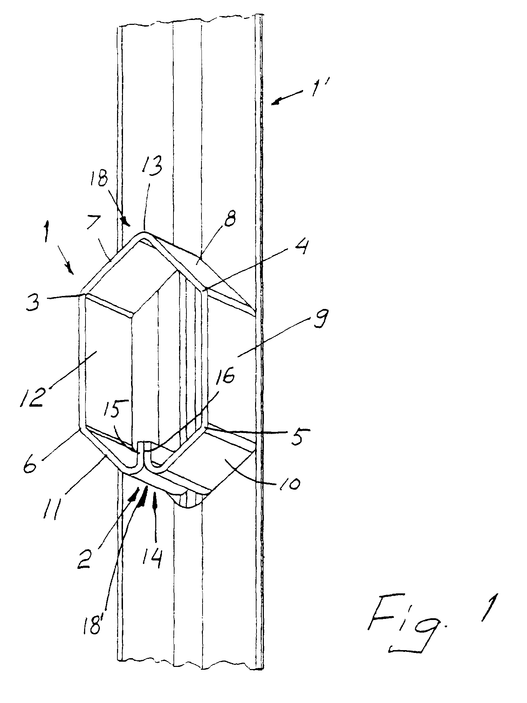

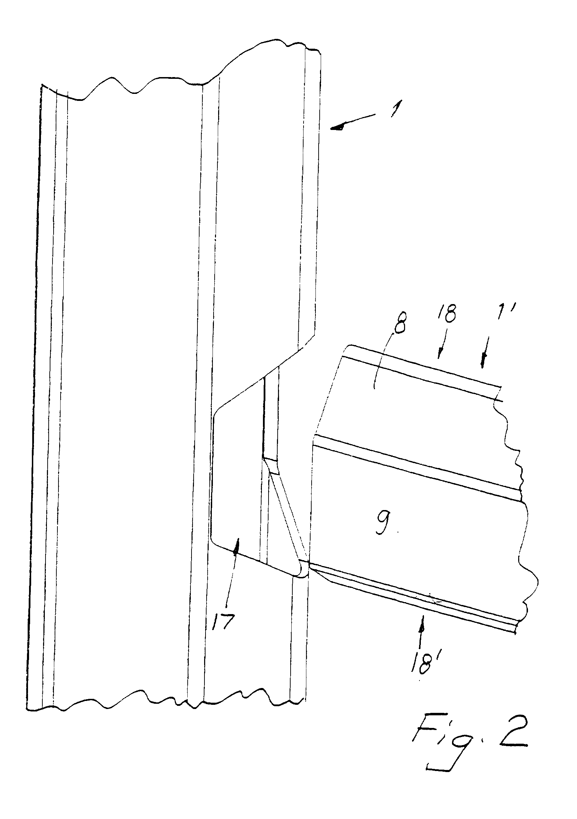

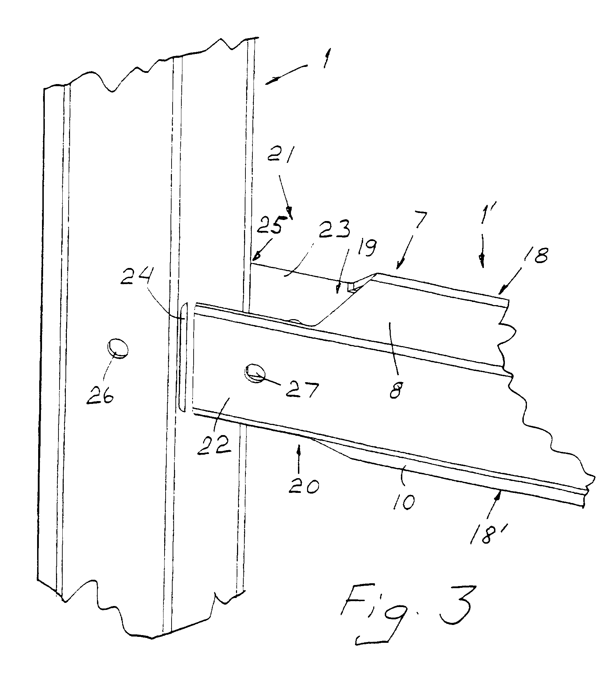

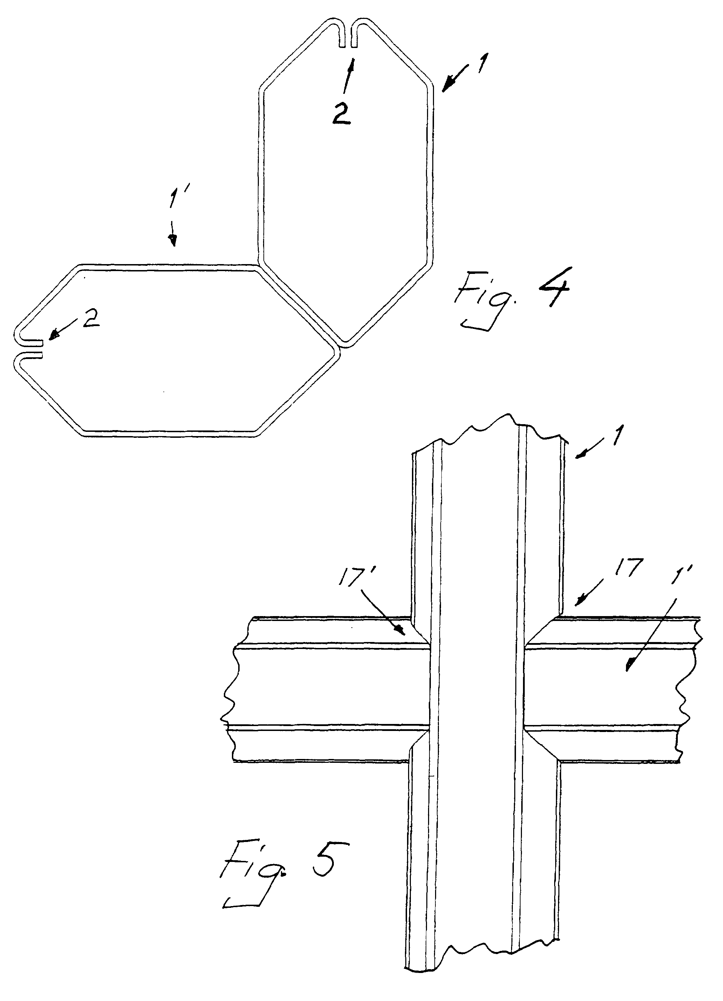

The profiles can be interconnected at an angle of 90°, alternatively at arbitrary angles, and there exist three methods to do this without having to carry out any welding. The first method consists in that one of the profiles is inserted into the other one, which appears from Fig. 1. The second method, illustrated in detail in fig. 3, consists in that "ears" or flaps 22,23 from one of the mouldings are introduced into slots in the other mounting. According to the third method uses made of interior or exterior fittings locking the profiles to each other.

It is naturally possible in combination with the above mentioned methods also to use welding. In such cases the welding seam is suitably located in the slot.

When the first method is used, one of theprofiles has a punched opening 17 bridging the acute edge portions 18,18' and having a contour corresponding to the external cross-section of another profile 1'. In this way that the profile 1' can, after having been inserted into the punched opening 17, be fixed in position thereby riveting welding or by use of screws. When said profile 1' passes through or crosses the first profile 1 the latter has two opposite punched openings 17,17'.

According to the second joining method two openings 19,20 are punched out in the profile 1', which is to be fixed in position in the first profile 1, in the opposite sides 7,8 and 10,11, forming edge portions 18,18'. A depth of openings 19 and 20 in the end section 21 of profile 1' does approximately correspond to 3/4 of the area of the profile as seen in a plane through the acute angles 13,14. The "ears" or flaps 22,23 formed in this way can be inserted into slots 24 and 25 cut out in the first profile 1. When flaps 22 and 23 have been inserted into slots 24 and 25 the profiles 1 and 1' can be fixed to each other by means of screws or rivets or with the aid of holes 26 and 27 in the profiles.

According to the third joining method fittings, not shown in the drawings, are inserted into the hollow profile 1 and 1' or placed externally on said profiles 1,1' whereupon they hold the profiles in position with the aid of rivets, welding seams or screws.

When the hollow profile 1 and 1' are to be jointed special tools can be used to form the holes which should co-incide during the joining process. A die or punsch is then inserted into the profiles causing the slot 2 to widen, the exact position of said die or unch will be achieved by said slot 2.

Due to the fact that the material is constituted by a preferably high stress, resilient steel, the profiles are not deformed permanently during the punching operation thanks to their great elasticity. When hinges mountings, fittings and the like are to be secured by welding, internal reinforcements can be obtained by introduction of heavier material into the profile.

## Claims

1. A hollow profile, consisting of a resilient metallic material the wall of which having an opening extending in the longitudinal direction of the profile, **characterized in that** the resilent material forming the profile comprises a thin walled resilient metal sheet of high strength with a tensional strength preferably over 700 N/mm² at the same time as said opening is formed as a slot (2) extending along a longitudinal side or in the transfer zone between two adjacent longitudinal sides of the wall, said slot (2) can be opened and widened due to the elasticity of the material to permit insertion of tools, reinforcement means and the like whereupon it resiliently resumes its original shape.

2. A hollow profile according to claim 1, **characterized in that** the cross sectional shape of said wall of the profile is oval, circular, elliptic or polygon, comprising at least three sides, said longitudinal slot (2) of the polygon extending along a longitudinal side or in the junction between two adjacent longidudinal sides.

3. A hollow profile according to claim 1, **characterized in that** it has at least two obtuse angles (3-6) between its sides (7-12), and two opposite acute angles (13,14).

4. A hollow profile according to claim 3, **characterized in that** said obtuse angles (3-6) exceed 90°, preferably 135°, and **in that** said acute angles preferably are about 90°.

5. A hollow profile according to claim 1, **characterized in that** said longitudinal slot (2) is defined by edge portions (15,16) bent towards each other from adjacent sides and parallel to each other.

6. A hollow profile according to claim 5, **characterized in that** edge portions (15,16) extend a short distance into the profile (1) and are located at a predetermined distance from each other, preferably equal to one to two times the thickness of the material, or are in contact with each other, preferably with a resilient action.

7. A hollow profile according to claim 1 or 2, **characterized in that** it comprises a first pair of adjacent sides (7,8,10,11) having between them an angle (13,14) of about 90°, each of said sides (7,8,10,11) merging with two opposite sides (9,12) and defining therewith an angle (3-6) above 90°, all of said opposite sides being mutually parallel.

8. A hollow profile according any of the preceding claims, **characterized in that** the moulding corners forming said angles being rounded.

9. A hollow profile according to claim 1 or 2, **characterized in that** it can be secured to an adjacent angled profile (1') by means of said first profile having at least one punched cut opening (17) corresponding to the external cross-sectional form of said second profile (1'), after having entered the punched out opening (17) or, when the moulding passes through, opposite punched cut openings (17), can be fixed in position in said first profile (1).

10. A hollow profile according to claim 1 or 2, **characterized in that** said first profile (1) can be secured to an adjacent angled profile (1") due to said adjacent attachable profile having punched out openings (19,20) in those opposite sides (7,8 and 10,11) which define acute angles between each other and which correspond to the moulding shape up to a depth into the end portion (21) of the profile (1") corresponding to at least ¾ of the profile area as seen in a plane through said acute angles.

## Patentansprüche

1. Hohles Profil aus einem elastischen metallischen Material, dessen Wand eine sich in Längsrichtung des Profils erstreckende Öffnung aufweist, **dadurch gekennzeichnet, dass** dieses das Profil formende elastische Material ein dünnwandiges, elastisches, hochfestes Metallblech enthält, das eine Zugfestigkeit von vorzugsweise über 700 N/mm² aufweist und zur selben Zeit die Öffnung als Schlitz (2) gebildet wird, der sich entlang einer Längsseite oder im Übergangsbereich zwischen zwei benachbarten Längsseiten der Wand erstreckt, wobei der Schlitz (2) aufgrund der Elastizität des Materials geöffnet und geweitet werden kann, um das Einführen von Werkzeug, Verstärkungsmitteln und ähnlichem zu erlauben, woraufhin es seine Ursprungsform elastisch wieder annimmt.

2. Hohles Profil nach Anspruch 1, **dadurch gekennzeichnet, dass** die Querschnittsform der Profilwand oval, kreisförmig, elliptisch oder vieleckig ist, wenigstens drei Seiten hat, wobei der Längsschlitz (2) des Polygons entlang einer Längsseite oder an der Verbindungsstelle zwischen zwei benachbarten Längsseiten verläuft.

3. Hohles Profil nach Anspruch 1, **dadurch gekennzeichnet, dass** es wenigstens zwei stumpfe Winkel (3-6) zwischen seinen Seiten (7-12) und zwei gegenüberliegende spitze Winkel (13, 14) hat.

4. Hohles Profil nach Anspruch 3, **dadurch gekennzeichnet, dass** die stumpfen Winkel (3-6) 90°, vorzugsweise 135°, übersteigen und dass die spitzen Winkel vorzugsweise etwa 90° betragen.

5. Hohles Profil nach Anspruch 1, **dadurch gekennzeichnet, dass** der Längsschlitz (2) durch Randabschnitte (15, 16) definiert ist, die von gegenüber liegenden Seiten aufeinander zu gebogen sind und parallel zueinander liegen.

6. Hohles Profil nach Anspruch 5, **dadurch gekennzeichnet, dass** die Randabschnitte (15, 16) eine kurze Strecke in das Profil (1) hineinreichen und mit einem vorbestimmten Abstand zueinander angeordnet sind, vorzugsweise ein- bis zweimal der Dicke des Materials entsprechend, oder sich berühren, vorzugsweise mittels eines elastischen Vorgangs.

7. Hohles Profil nach Anspruch 1 oder 2, **dadurch gekennzeichnet, dass** es ein erstes Paar benachbarter Seiten (7, 8, 10, 11) enthält, die zwischen sich einen Winkel (13, 14) von etwa 90° haben, wobei jede der Seiten (7, 8, 10, 11) mit zwei gegenüberliegenden Seiten (9, 12) verschmilzt und damit einen Winkel (3-6) von über 90° definiert, wobei alle gegenüberliegenden Seiten zueinander parallel sind.

8. Hohles Profil nach einem der vorhergehenden Ansprüche, **dadurch gekennzeichnet, dass** die die Winkel bildenden Formecken abgerundet sind.

9. Hohles Profil nach Anspruch 1 oder 2, **dadurch gekennzeichnet, dass** es an einem benachbarten winkligen Profil (1') mithilfe des ersten Profils befestigt werden kann, das wenigstens eine gestanzte geschnittene Öffnung (17) hat, die der äußeren Querschnittsform des zweiten Profils (1') entspricht, nachdem es in die ausgestanzte Öffnung (17) eingedrungen ist oder, wenn das Formteil hindurchläuft, in gegenüberliegende gestanzte geschnittene Öffnungen (17), in dem ersten Profil (1) fixiert werden kann.

10. Hohles Profil nach Anspruch 1 oder 2, **dadurch gekennzeichnet, dass** das erste Profil (1) an einem benachbarten winkligen Profil (1") befestigt werden kann, da das benachbarte anfügbare Profil ausgestanzte Öffnungen (19, 20) in jenen gegenüberliegenden Seiten (7, 8 und 10, 11) hat, die spitze Winkel zwischen sich definieren und die der Formteilgestalt bis zu einer Tiefe in den Endabschnitt (21) des Profils (1") hinein entsprechen, die mindestens ¾ des Profilbereichs entspricht, in einer Ebene durch die spitzen Winkel gesehen.

## Revendications

1. Profilé creux, consistant en un matériau métallique élastique, dont la paroi a une ouverture s'étendant dans la direction longitudinale du profilé, **caractérisé en ce que** le matériau élastique formant le profilé comprend un feuillard métallique élastique à paroi mince d'une grande résistance ayant une résistance à la traction de préférence supérieure à 700 N/mm², en même temps que l'ouverture est formée sous la forme d'une fente (2) s'étendant le long d'un côté longitudinal dans la zone de transition entre deux côtés longitudinaux voisins de la paroi, la fente (2) peut être ouverte et élargie en raison de l'élasticité du matériau pour permettre une insertion d'outils, de moyens de renfort et analogues, puis elle reprend élastiquement sa forme d'origine.

2. Profilé creux suivant la revendication 1, **caractérisé en ce que** la forme de section transversale de la paroi du profilé est ovale, circulaire, elliptique ou polygonale, comprenant au moins trois côtés, la fente (2) longitudinale du polygone s'étendant le long d'un côté longitudinal ou à la jonction entre deux côtés longitudinaux voisins.

3. Profilé creux suivant la revendication 1, **caractérisé en ce qu'**il a au moins deux angles (3 à 6) obtus entre ses côtés (7 à 12) et deux angles (13, 14) opposés aigus.

4. Profité creux suivant la revendication 3, **caractérisé en ce que** les angles (3 à 6) obtus dépassent 90°, de préférence 135°, et **en ce que** les angles aigus sont de préférence d'environ 90°.

5. Profilé creux suivant la revendication 1, **caractérisé en ce que** la fente (2) longitudinale est définie par des parties (15, 16) de bord coudées l'une vers l'autre, à partir de côtés voisins, et mutuellement parallèles.

6. Profilé creux suivant la revendication 5, **caractérisé en ce que** des parties (15, 16) de bord s'étendent sur une courte distance dans le profilé (1) et sont placées à une distance déterminée à l'avance l'une de l'autre, de préférence égale à une à deux fois l'épaisseur du matériau, ou sont en contact l'un avec l'autre, de préférence avec un effet élastique.

7. Profilé creux suivant la revendication 1 ou 2, **caractérisé en ce qu'**il comprend une première paire de côtés (7, 8, 10, 11) voisins faisant entre eux un angle (13, 14) d'environ 90°, chacun des côtés (7, 8, 10, 11) se réunissant avec deux côtés (9, 12) opposés et définissant entre eux un angle (3 à 6) supérieur à 90°, tous les côtés opposés étant mutuellement parallèles.

8. Profilé creux suivant l'une quelconque des revendications précédentes, **caractérisé en ce que** les coins de moulage formant les angles sont arrondis.

9. Profilé creux suivant la revendication 1 ou 2, **caractérisé en ce qu'**il peut être fixé à un profilé (1') voisin en cornière, par le fait que le premier profilé a au moins une ouverture (17) découpée par poinçonnage correspondant à la forme de section transversale extérieure du deuxième profilé (1'), après être entré dans l'ouverture (17) poinçonnée ou, lorsque le moulage y passe, dans des ouvertures (17) opposées poinçonnées, le profil (1') voisin peut être fixée en position dans le premier profilé (1).

10. Profilé creux suivant la revendication 1 ou 2, **caractérisé en ce que** le premier profilé (1) peut être fixé à un profilé (1") voisin en cornière en raison du fait que le profilé voisin, qui peut être fixé, a des ouvertures (19, 20) poinçonnées dans les côtés (7, 8 et 10, 11) opposés qui définissent des angles aigus entre eux et qui correspondent à la forme de moulage jusqu'à une certaine profondeur dans la partie (21) d'extrémité du profilé (1") correspondant à au moins trois quarts de la surface du profilé, tel que vu dans un plan passant par les angles aigus.
